# DEMANDE DE BREVET EUROPEEN

(11) **EP 1 293 135 A1**
(43) Date de publication de la demande: **19.03.2003**
(21) Numéro de dépôt: 01490034.4
(22) Date de dépôt: 07.09.2001
(51) Int. Cl.: A23N 15/00

(54) **Procédé et dispositif pour effeuiller et couper le coeur des choux**

(71) Demandeur: Delecroix, Denis, 59173 Blaringhem (FR)
(72) Inventeur: Delecroix, Denis, 59173 Blaringhem (FR)
(74) Mandataire: Hennion, Jean-Claude

(57) **Abrégé**

Procédé pour l'étrognage et l'éclatement en fleurettes des choux à pommes, caractérisé en ce que l'étrognage du chou est réalisé alors que le chou est maintenu plaqué dans une coupelle support (3) pourvue d'un trou central (7) de centrage, ce plaquage étant assuré par pression rotative d'une pièce d'appui (8) sur l'inflorescence du chou. Dispositif pour la mise en oeuvre de ce procédé.

## Description

L'invention se rapporte au domaine technique des machines pour parer des choux-fleurs, brocolis et autres légumes équivalents.

Par brocoli, on désigne communément tous les choux-fleurs à pommes colorées (pourpre, vert), et notamment Brassica olerarea, variété botrytis sous variété cymosa. Les brocolis sont consommés depuis longtemps. Désignés sous le terme « calabrese » en Grande-Bretagne, ils sont connus depuis le 16^{ème} siècle et produits de nos jours à raison de 18 000 tonnes par an en France, essentiellement dans leur variété à pomme verte.

Généralement, dans une tête de chou-fleur ou de brocoli, on ne mange que l'inflorescence, appelée tête ou pomme et formée de fleurettes.

Le trognon, parfois appelé coeur est éliminé lors de l'étrognage de même que les feuilles qui sont éliminées par effanage.

En particulier, dans la commercialisation des choux-fleurs ou brocolis surgelés, ce sont surtout les inflorescences, appelées fleurettes qui présentent de l'intérêt, le trognon étant peu comestible.

Il est donc préférable, avant de procéder à la surgélation du choux-fleur, d'en éliminer le trognon.

Les fabricants de plats surgelés souhaitent pouvoir disposer de très grandes quantités de fleurettes prêtes à cuisiner, c'est à dire des fleurettes de taille suffisamment faible pour être cuisinées (on parle ainsi d'éclatement des têtes de choux-fleures en fleurettes).

Les choux-fleurs et brocolis sont très fragiles et lorsqu'ils sont abîmés lors de leurs récolte ou de leur transformation, ils deviennent souvent impropres à la vente, voire à la consommation.

C'est pourquoi pour l'heure la découpe des fleurettes des brocolis est encore souvent réalisée à la main, ce qui est coûteux et fastidieux.

Il a été tenté depuis longtemps de mécaniser l'étrognage et la découpe des fleurettes de chou-fleur ou brocolis.

Selon un premier type de montage antérieur, un cylindre à bord coupant, dont le diamètre est en moyenne celui des trognons, est passé à travers un chou-fleur dans l'axe du trognon. Ce cylindre de carottage est conventionnellement disposé au-dessus des choux posés sur des coupelles. Ce procédé, s'il permet effectivement d'éliminer le trognon, entraîne la perte des fleurettes se trouvant dans l'alignement du trognon. De plus, par un tel procédé, on n'obtient pas automatiquement la séparation des fleurettes en bouquets.

Selon une variante de ce premier type de montage antérieur, illustrée par le document FR-A-2 376 632, en regard du cylindre à bord tranchant, une ogive à ailettes tranchantes, coaxiale au cylindre tranchant, permet la séparation des fleurettes. Le montage décrit dans le document FR-A-2 376 632 présente l'inconvénient important de découper les fleurettes de manière aléatoire, et de produire ainsi des fuseaux de fleurettes sous forme de petits morceaux irréguliers, ce qui nuit à la présentation du produit et à sa mise en valeur.

Selon une deuxième variante de ce premier type de montage, illustrée par exemple par le document FR-A-2 769 180, la découpe des trognons est réalisée par des couteaux mobiles disposés en dessous des choux, le trognon de chaque chou étant placé dans l'ouverture centrale d'une coupelle dans laquelle le chou est maintenu plaqué lors de la découpe de son trognon.

Selon un deuxième type de montage antérieur, deux lames de scie circulaire découpent dans le chou un morceau en forme de coin attenant au trognon, celui-ci se trouvant ainsi extrait en totalité du chou par l'action des deux scies. Un tel procédé entraîne le plus souvent une détérioration des fleurettes et ne permet pas leur séparation mutuelle. Pour ce deuxième type de montage, on peut se référer, par exemple, au document FR-A-2 380 714.

Selon un troisième type de montage antérieur, illustré par le document FR-A-2 410 967, le chou-fleur est entraîné dans une coupelle jusque vers un poste de travail où il est placé sous trois lames en acier de forme conique, ces trois lames convergeant vers le centre de la coupelle pour former en fin de course un cône, isolant le trognon du chou-fleur des fleurettes. Le chou-fleur est posé sur les coupelles, trognon vers les lames convergentes.

Selon un quatrième type de montage antérieur, illustré par les documents FR-A-2 668 337 et EP-A-483 006, les brocolis sont tenus fleurettes vers le bas par des pinces montées sur carrousel, un premier couteau à mouvement latéral par rapport au trognon venant étêter le brocoli. Un tel montage s'avère de réglage complexe et la séparation des fleurettes est assez aléatoire, en dépit de la mise en place d'un deuxième couteau horizontal venant couper la ou les fleurettes centrales restantes sur les tiges, ainsi qu'il est proposé dans ce document FR-A-2 668 337.

Selon un cinquième type de montage antérieur, illustré par exemple par le document FR-A-2 746 262, le chou-fleur est pressé contre une pièce support comportant un élément central creux, pour l'élimination du trognon, élément central autour duquel sont disposés une pluralité de lames découpant les fleurettes en quartiers.

Différentes variantes de mises en oeuvre des montages présentés ci-dessous peuvent être trouvées dans les documents suivants :
- demande de brevet en France publiée sous le numéro 2 766 334 ;
- demandes de brevet européen publiées sous les numéros 0 244 387, 0 262 747, 0 495 353, 0 552 902, 0 655 891, 0 853 892, 0 953 297 ;
- brevets délivrés aux Etats-Unis sous les numéros 3 320 989, 3 380 500, 3 478 794, 3 478 795, 3 490 506, 3 527 276, 3 612 124, 3 646 977, 3 695 323, 3 754 470, 3 886 857, 4 036 123, 4 041 672, 4 095 391, 4 099 456, 4 168 642, 4 176 595, 4 241 096, 4 420 118, 4 455 929, 4 480 536, 4 503 761, 4 601 156, 4 658 714, 4 674 270, 4 773 324, 4 787 305, 5 009 909, 5 074 203, 5 102 678, 5 156 874, 5 168 799, 5 168 801, 5 277 107, 5 470 602, 5 588 278, 5 590 591, 6 036 989 ;
- demandes internationales de brevet publiées sous les numéros 89 01300, 94 26134, 96 13180, 97 13418.

La particularité du brocoli est de présenter une tige principale et des tiges secondaires terminées par des fleurettes. De sorte que pour parer le brocoli, il est nécessaire de le couper au niveau des tiges secondaires au plus près possible des fleurettes. La découpe optimale doit ainsi présenter une forme demi-sphérique ou ogivale.

Les choux-fleurs présentent au contraire un aspect beaucoup plus compact, le brocoli produisant généralement une inflorescence avec des pédicelles plus minces et plus longs que ceux du chou-fleur. De sorte que les machines connues dans l'art antérieur ne parviennent pas à étrogner ou éclater correctement en fleurettes tant les choux-fleurs que les brocolis.

L'invention vise à fournir un procédé et un dispositif permettant l'éclatement des choux-fleurs, brocolis, chou romanesco, ou tout autre légume à inflorescence équivalent, ce dispositif assurant une séparation des fleurettes en tailles homogènes et suffisamment faibles pour être cuisinées, ce dispositif pouvant être mis en oeuvre sur les lieux de récolte de sorte à éviter les coûts de transport des légumes et des trognons.

Le procédé et le dispositif selon l'invention doivent en outre être économiques notamment parce qu'ils :
- ne nécessitent que peu d'interventions manuelles ;
- n'engendrent que très peu de pertes ou d'altérations des fleurettes ;
- évitent le transport des trognons, qui peuvent être laissés sur les champs de récolte, le coeur des choux-fleurs ou brocolis pouvant représenter de 35 à 50% du poids total du légume ;
- réduisent le temps entre récolte et préparation en vue d'une incorporation en plat cuisiné ou surgelé, les fleurettes parvenant ainsi dans un état de fraîcheur maximal sur les lieux de préparation ou surgélation des aliments.

Enfin, le dispositif selon l'invention doit être de structure mécanique robuste, permettant son utilisation prolongée et intensive, les pièces d'usure étant par ailleurs peu coûteuses.

A ces fins l'invention se rapporte, selon un premier aspect, à un procédé pour l'étrognage et l'éclatement en fleurettes des choux à pommes, l'étrognage du chou étant réalisé alors que le chou est maintenu plaqué dans une coupelle support pourvue d'un trou central de centrage, ce plaquage étant assuré par pression rotative d'une pièce d'appui sur l'inflorescence du chou.

Selon une mise en oeuvre du procédé, la pression rotative est appliquée suivant deux sens de rotation inverses de la pièce d'appui.

L'invention se rapporte, selon un deuxième aspect, à un dispositif pour la mise en oeuvre du procédé présenté ci-dessus, ce dispositif comprenant un convoyeur des coupelles ou assiettes dans lesquelles sont placés les choux à pommes, ce convoyeur assurant le déplacement des coupelles selon un plan de convoyage depuis un poste de chargement des choux jusque vers un premier poste d'étrognage et un deuxième poste d'éclatement des choux en fleurettes.

Selon diverses réalisations, le dispositif présente les caractères suivants, éventuellement combinés :
- les pièces d'appui des choux dans leurs coupelles sont des coupoles montées sur une tige actionnée sensiblement perpendiculairement au plan de convoyage des coupelles, actionnement réalisé suivant un mouvement réversible entre une position basse d'appui des choux dans les coupelles et une position haute dans laquelle les coupoles sont à distance des choux ;
- l'actionnement des tiges support de coupoles est obtenu par des moyens comprenant un vérin et un ressort de rappel, ou tout autre moyen équivalent ;
- les coupoles sont en forme de cuvette monobloc, par exemple en alliage métallique ou en matériau polymère ;
- les coupoles comprennent deux demi-coupoles articulées à la manière d'une pince, la position fermée de la pince étant celle d'appui de la coupole sur l'inflorescence du chou, la position ouverte étant celle de convoyage des choux étrognés depuis le premier poste d'étrognage jusque vers le deuxième poste d'éclatement des choux en fleurettes ;
- les tiges des coupoles sont montées sur un support coulissant sur une barre s'étendant sensiblement parallèlement au plan de convoyage des coupelles, ce support coulissant étant pourvu de moyens permettant son blocage en position prédéterminée de sorte à ce que la tige de coupole et le trou de la coupelle placée en regard puissent être sensiblement alignés au premier poste d'étrognage du chou ;
- le dispositif comprend, au deuxième poste d'éclatement des choux, un couteau éclateur monté sur une tige actionnée sensiblement perpendiculairement au plan de convoyage des coupelles, actionnement réalisé suivant un mouvement réversible entre une position basse d'éclatement des choux en fleurettes et une position haute dans laquelle le couteau est à distance des choux ;
- l'actionnement des tiges support de couteau est obtenu par des moyens comprenant un vérin et un ressort de rappel, ou tout autre moyen équivalent ;
- les couteaux éclateurs sont pourvus d'un axe principal à partie extrême inférieure en forme de lame tranchante ;
- les couteaux éclateurs présentent deux plans de symétrie sensiblement perpendiculaires entre deux ;
- de part et d'autre d'un premier de leurs deux plans de symétrie, les couteaux éclateurs sont pourvus de deux bras s'étendant en direction radiale par rapport à l'axe principal des couteaux, ces bras portant chacun trois lames ;
- les trois lames portées par chacun des bras des couteaux éclateur comprennent une première lame s'étendant sensiblement suivant un plan de symétrie des couteaux éclateur et, de part et d'autre dudit plan, deux lames inclinées à 45° environ par rapport à la direction radiale à l'axe principal des couteaux ;
- les tiges des couteaux éclateurs sont montées sur un support coulissant sur une barre s'étendant sensiblement parallèlement au plan de convoyage des coupelles, ce support coulissant étant pourvu de moyens permettant son blocage en position prédéterminée, de sorte à ce que l'axe principal du couteau éclateur et le trou central de la coupelle placée en dessous du couteau puisent être sensiblement alignés au deuxième poste d'éclatement des choux en fleurettes ;
- les coupelles sont montées de manière amovible sur une bande de convoyage ;
- la bande de convoyage défile en boucle sensiblement verticale et comprend un brin supérieur au droit duquel sont disposés les coupoles d'appui et les couteaux éclateurs, et un brin inférieur dans lequel les coupelles ont leur ouverture tournée vers le bas ;
- le convoyeur est logé dans un caisson ouvert en partie supérieure, ce caisson comprenant une paroi de fond et des parois latérales, les fleurettes des choux à pommes tombant après découpe dans ledit caisson lors du retournement des coupelles au cours du trajet de la bande de convoyage entre son brin supérieur et son brin inférieur ;
- des sur-coupelles sont disposées de manière amovible sur les coupelles, ces sur-coupelles comprenant une partie annulaire supérieure et des pattes de fixations latérales.

D'autres objets et avantages de l'invention apparaîtront au cours de la description suivante de modes de réalisation, description qui va être effectuée en se référant aux dessins annexés dans lesquels :
- la figure 1 est une vue schématique en perspective d'un poste de machine pour la mise en oeuvre de la première étape du procédé selon l'invention ;
- la figure 2 est une vue schématique en perspective d'un poste de machine pour la mise en oeuvre d'une deuxième étape du procédé selon l'invention ;
- la figure 3 est une vue schématique en perspective d'un couteau éclateur utilisé au deuxième poste représenté en figure 2 ;
- la figure 4 est une vue en coupe d'une coupelle pourvue d'un pli de centrage sur le bord de son trou central ;
- les figures 5 et 6 sont des vues schématiques d'une coupole de plaquage des choux dans les coupelles, cette coupole en forme de pince étant représentée dans un état d'ouverture en figure 5 et en état de fermeture en figure 6.

Le dispositif 1 selon l'invention comprend un châssis principal porteur formé de profilés métalliques soudés, ou tout autre montage analogue. Ce châssis, non représenté, est avantageusement monté sur roues.

Dans un mode de réalisation, le châssis comprend quatre poteaux sensiblement verticaux, deux de ces poteaux étant en appui au sol, les deux autres poteaux verticaux supportant des roues.

Dans d'autres modes de réalisation, le châssis est porté par plus de deux roues, par exemple deux paires de roues placées suivant deux trains parallèles.

Le châssis supporte un convoyeur 2 sur lequel sont montées des coupelles supports 3 pour les choux-fleurs, brocoli, romanesco, calabrese ou tout autre inflorescence équivalente devant être découpée et éclatée en fleurettes.

Dans la suite du texte, afin de simplification, il ne sera fait état que de la découpe et l'éclatement des fleurettes de chou-fleur ou brocoli, étant entendu que le procédé et le dispositif selon l'invention peuvent être employés pour tout autre type de produit équivalent.

Ainsi qu'il apparaîtra plus complètement par la suite, les coupelles 3 sont de formes et dimensions adaptables au type et dimensions moyennes des inflorescences à découper et éclater en fleurettes. Il est ainsi possible d'adapter les coupelles aux dimensions des inflorescences, qui diffèrent, pour un type de chou donné, suivant les cultivars, suivant les degrés de maturité et les conditions de culture notamment.

Ainsi qu'il apparaîtra plus complètement par la suite, le dispositif selon l'invention comprend en plus de coupelles amovibles de type adaptables aux produits à découper et éclater en fleurettes, plusieurs autres moyens de réglage des conditions de découpe et éclatement des fleurettes. De sorte que le dispositif selon l'invention présente une grande souplesse d'utilisation.

Dans le mode de réalisation représenté, les coupelles 3 sont fixées de manière amovible sur une bande de convoyage 2 entraînée en boucle sans fin, entre deux cylindres de renvoi extrêmes parallèles, non représentés.

Ainsi que le comprendra l'homme du métier, les coupelles 3 peuvent, dans d'autres modes de réalisation, être déplacées suivant d'autres formes de boucles de convoyage, connues en elles-mêmes dans le domaine des convoyeurs à bande.

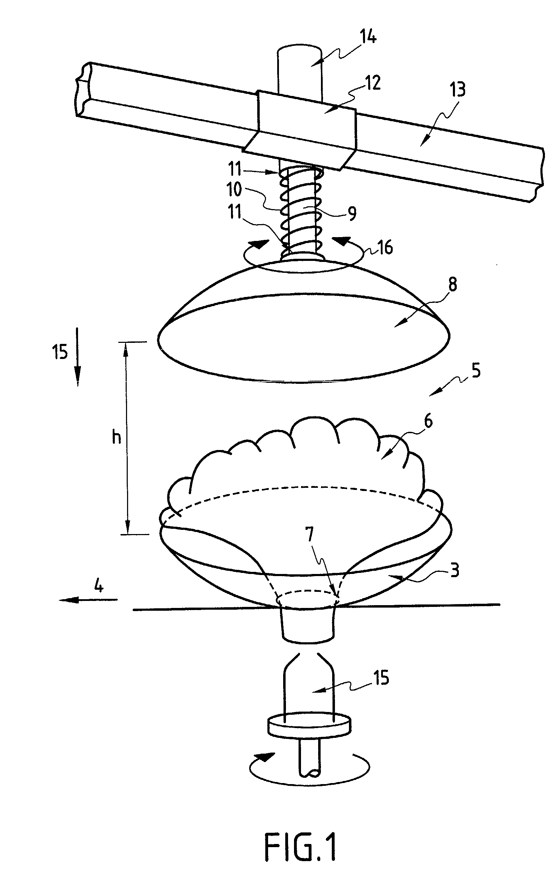

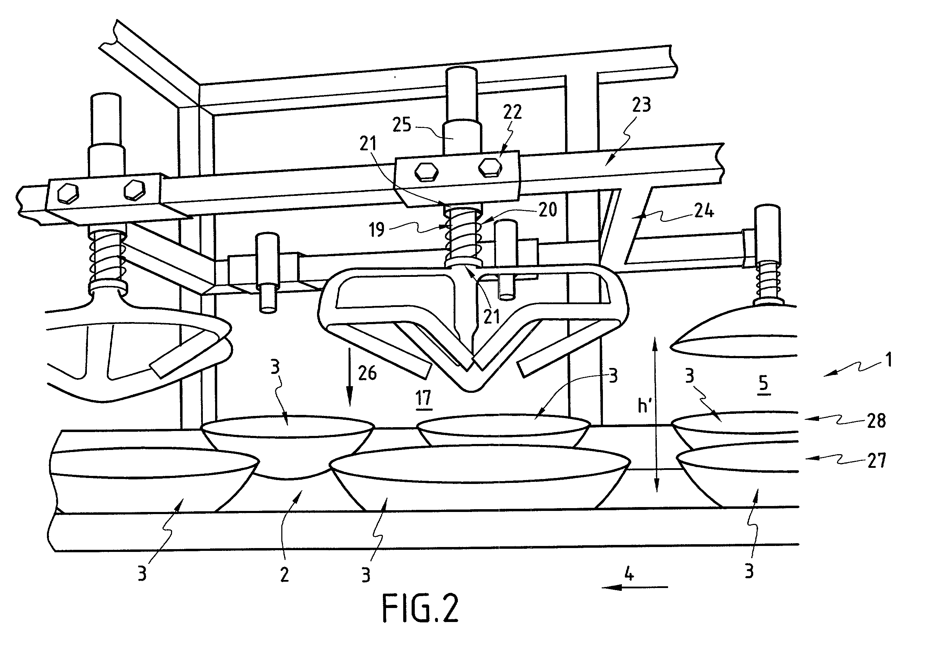

Les coupelles 3 sont entraînées suivant le flèche 4 de la figure 2 de sorte à venir au droit et en dessous d'au moins un premier poste 5 schématisé en figure 1 et sur la droite de la figure 2.

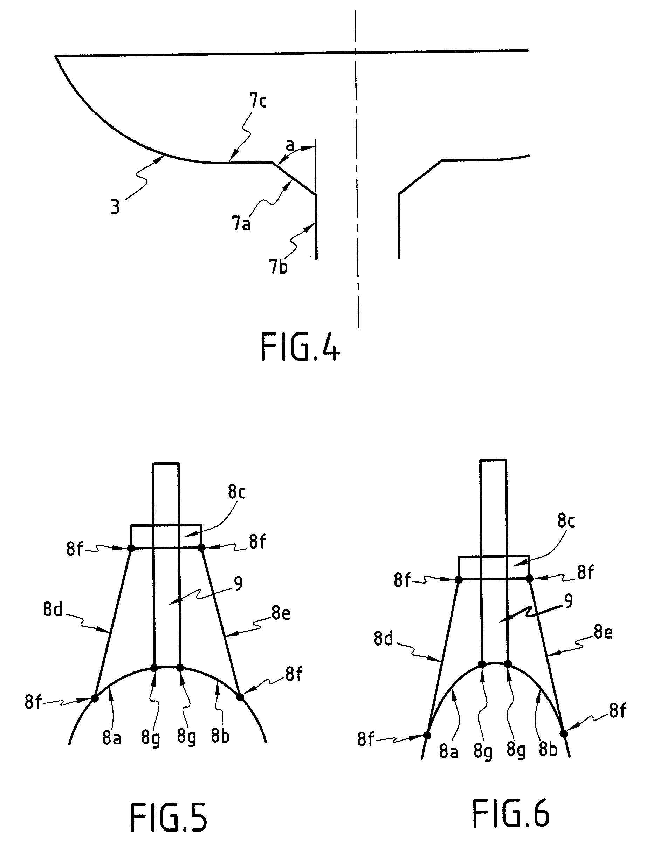

Dans ce premier poste 5, les choux 6 sont posés dans les coupelles 3, ces coupelles 3 étant pourvues d'un trou central 7, ce trou central étant pourvu, sur son bord, de plis de centrage définissant un tronc de cône 7a. Ainsi qu'il est représenté en figure 4, ce tronc de cône 7a relie le trou central axial 7b de la coupelle 3 et le fond 7c de cette coupelle. Le tronc de cône forme un angle a compris entre 30 et 70° par rapport à l'axe du trou central 7b, de préférence de l'ordre de 45°.

Une coupole 8, disposée à l'aplomb et en regard de la coupelle 3 contenant le chou 6, est montée sur une tige 9 sensiblement coaxiale au trou 7 de centrage de la coupelle 3. Un ressort hélicoïdal 10, ou tout autre moyen élastique équivalent, est emmanché sur cette tige 9, entre deux bagues de serrage 11 transversales à la tige 9.

La tige 9 est montée sur un support 12 qui peut coulisser et être bloqué en position sur une barre 13 s'étendant sensiblement parallèlement au sens de convoyage 4 des coupelles 3.

Ce montage coulissant du support 12 des tiges 9 de coupoles 8 permet de s'assurer que ces coupoles sont bien à l'aplomb et en regard des coupelles 3, lorsque ces coupelles 3 sont au premier poste 5 de mise en oeuvre du procédé.

La barre 13 appartient à un châssis monté coulissant suivant une direction sensiblement perpendiculaire au plan de convoyage des coupelles 3, ce châssis pouvant être bloqué en position prédéterminée.

Il est ainsi possible d'adapter la hauteur h séparant les coupoles 8 des coupelles 3, au premier poste 5 de mise en oeuvre du procédé, ce réglage de hauteur h permettant de tenir compte de la taille des choux 6 contenus dans les coupelles 3.

Par le jeu d'un vérin 14 ou de tout autre moyen d'actionnement équivalent, la coupole 8 est rapprochée de la coupelle 3, de sorte à venir en contact avec le chou 6 (flèche 15). Dans le même temps, la tige 9 support de coupole 8 est mise en rotation alternative (double flèche 16).

Par l'appui de la coupole 8 sur le chou 6 contenu dans la coupelle 3, et le pivotement de la tige 9, on assure un bon centrage du chou dans la coupelle 3.

Dans le même temps, un mandrin 16 vient forer le trognon du chou, maintenu centré dans le trou central 7 de la coupelle 3.

La coupole représentée en figure 1 est en forme de cuvette monobloc, par exemple en alliage métallique ou en matériau polymère.

Dans un autre mode de réalisation, représenté en figures 5 et 6, la coupole est formée par deux demi-coupoles 8a, 8b articulées à la manière d'une pince ou d'un forceps. Cette articulation peut être obtenue par exemple de la manière représentée, à l'aide d'un manchon 8c coulissant sur la tige 9, ce manchon 8c étant relié par deux biellettes 8d, 8 e aux deux demi coupelles 8a, 8b, par des liaisons articulées 8f. Les deux demi coupoles 8a 8b étant montées articulées sur la tige 9 par des liaisons pivot 8g, le coulissement du manchon 8c sur la tige 9, entre deux butées prédéterminées, permet l'ouverture et la fermeture de la pince formée par ces deux demi coupoles 8a, 8b.

Lorsque les couteaux de fourrage portés par le mandrin 1 ont terminé de creuser le trognon du chou, le vérin 14 et le ressort 10 assurent la remontée de la coupole 8 et le convoyeur 2 est remis en marche pour amener le chou au deuxième poste de mise en oeuvre du procédé.

L'éclatement du chou alors que celui-ci est encore sensiblement monobloc et creusé de l'intérieur, ainsi que le bon centrage du chou lors de son étrognage permettent la production de fleurettes d'aspect homogène, au deuxième poste de découpe des fleurettes représenté en figure 2.

A ce deuxième poste 17, le chou-fleur ou le brocoli est placé dans la coupelle 3 à l'aplomb et en dessous d'un couteau éclateur 18.

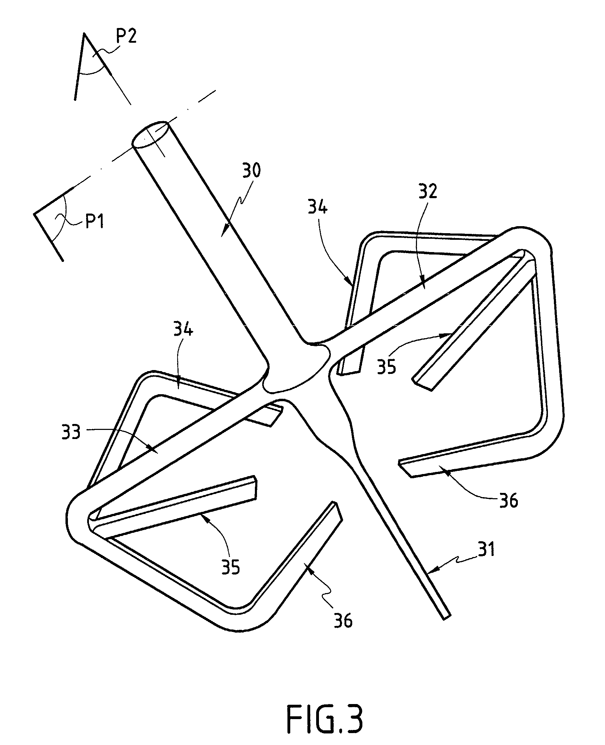

La forme de ce couteau éclateur 18 sera décrite ultérieurement en référence à la figure 3.

Ce couteau 18 est monté sur une tige 19 sensiblement coaxiale au trou 7 de centrage de la coupelle 3. Un ressort hélicoïdal 20, ou tout autre moyen élastique équivalent, est emmanché sur cette tige 19, entre deux bagues de serrage 21 transversales à la tige 19.

La tige 19 est montée sur un support 22 qui peut coulisser et être bloqué en position sur une barre 23 s'étendant sensiblement parallèlement au sens de convoyage 4 des coupelles 3.

Ce montage coulissant du support 22 des tiges 19 des couteaux 18 permet de s'assurer que ces couteaux 18 sont bien à l'aplomb et en regard des coupelles 3, lorsque ces coupelles 3 sont au deuxième poste 17 de mise en oeuvre du procédé.

La barre 23 appartient à un châssis 24 monté coulissant suivant une direction sensiblement perpendiculaire au plan de convoyage des coupelles 3, ce châssis 24 pouvant être bloqué en position prédéterminée.

Il est ainsi possible d'adapter la hauteur h' séparant les couteaux 18 des coupelles 3, au deuxième poste 17 de mise en oeuvre du procédé, ce réglage de hauteur h' permettant de tenir compte de la taille des choux 6 contenus dans les coupelles 3.

Par le jeu d'un vérin 25 ou de tout autre moyen d'actionnement équivalent, le couteau 18 est rapprochée de la coupelle 3, de sorte à pénétrer dans le chou 6 (flèche 26).

Dans un mode de réalisation, le couteau éclateur est animé d'un mouvement descendant et tournant lors de sa pénétration dans le chou.

Les fleurettes obtenues restent dans la coupelle 3 et peuvent être récupérées, par exemple par renversement de la coupelle lorsque celle ci passe un rouleau d'extrémité de la bande convoyeuse sans fin.

Dans le mode de réalisation représenté en figure 2, le deuxième poste d'éclatement des choux comporte quatre couteaux 18, dont seulement deux sont représentés, afin de clarté du dessin. Ces quatre couteaux sont disposés alignés deux à deux, de sorte à pouvoir éclater des choux placés sur deux lignes de coupelles sensiblement parallèles 27 28.

Ainsi que le comprendra l'homme du métier, le dispositif peut être pourvu de plus de quatre couteaux agissant simultanément ou non.

Selon cette réalisation, une sur-coupelle est montée amovible sur les coupelles 3. Ainsi, par exemple, la sur-coupelle peut être conformée pour la découpe des choux romanesco, les coupelles 3 étant des coupelles ou assiettes à brocolis.

On se reporte maintenant à la figure 3 qui illustre un mode de réalisation de couteau éclateur 18.

Ce couteau 18 est pourvu d'un axe principal 30 à partie extrême inférieure en forme de lame tranchante 31.

Ce couteau présente deux plans de symétrie sensiblement perpendiculaires entre deux P1, P2. De parte et d'autre du plan P2, le couteau est pourvu de deux bras 32,33 s'étendant en direction radiale par rapport à l'axe 30. Ces bras 32,33 portent chacun trois lames 34,35,36, à savoir :
- une première lame 35 s'étendant sensiblement suivant le plan P1 ;
- et, de part et d'autre de ce plan P1, deux lames inclinées à 45° environ par rapport à la direction radiale.

Le dispositif 1, monté sur roues, peut être amené sur les lieux de récolte des choux.

Dans un mode économique de mise en oeuvre, le dispositif n'est pas autonome en énergie, le groupe hydraulique ou la batterie d'une machine agricole s'avérant amplement suffisant pour assurer son alimentation en puissance (moteur pour le convoyeur, vérins). Bien entendu, dans d'autres modes de réalisation, le dispositif peut être pourvu de son propre groupe hydraulique de puissance ou de son propre groupe électrogène.

Le dispositif selon l'invention permet des économies importantes par rapport aux machines connues antérieurement, notamment parce qu'il :
- ne nécessite que peu d'interventions manuelles ;
- n'engendre que très peu de pertes ou d'altérations des fleurettes ;
- évite le transport des trognons, qui peuvent être laissés sur les champs de récolte, le coeur des choux-fleurs ou brocolis pouvant représenter de 35 à 50% du poids total du légume ;
- réduit le temps entre récolte et préparation en vue d'une incorporation en plat cuisiné ou surgelé, les fleurettes parvenant ainsi dan un état de fraîcheur maximal sur les lieux de préparation ou surgélation des aliments.

Enfin, le dispositif selon l'invention est de structure mécanique robuste, permettant son utilisation prolongée et intensive, les pièces d'usure étant par ailleurs peu coûteuses.

## Revendications

1. Procédé pour l'étrognage et l'éclatement en fleurettes des choux à pommes, **caractérisé en ce que** l'étrognage du chou (6) est réalisé alors que le chou (6) est maintenu plaqué dans une coupelle support (3) pourvue d'un trou central de centrage (7), ce plaquage étant assuré par pression rotative d'une pièce d'appui (8) sur l'inflorescence du chou (6).

2. Procédé selon la revendication 1, **caractérisé en ce que** la pression rotative est appliquée suivant deux sens de rotation inverses de la pièce d'appui.

3. Procédé selon la revendication 1 ou 2, **caractérisé en ce qu'**il comprend une étape d'éclatement du chou à l'aide d'un couteau éclateur animé d'un mouvement de translation et de rotation lors de sa pénétration dans le chou.

4. Dispositif pour la mise en oeuvre du procédé selon l'une quelconque des revendications 1 à 3, **caractérisé en ce qu'**il comprend un convoyeur (2) des coupelles ou assiettes (3) dans lesquelles sont placés les choux (6) à pommes, ce convoyeur (2) assurant le déplacement des coupelles (3) selon un plan de convoyage depuis un poste de chargement des choux jusque vers un premier poste d'étrognage (5) et un deuxième poste (17) d'éclatement des choux en fleurettes.

5. Dispositif selon la revendication 4, **caractérisé en ce que** les coupelles sont pourvues d'un trou axial central (7b), des plis de centrage définissant un tronc de cône (7a) reliant ce trou central (7b) à la paroi de fond (7c) des coupelles (3).

6. Dispositif selon la revendication 5, **caractérisé en ce que** le tronc de cône (7a) forme un angle a compris entre 30 et 70° par rapport à l'axe du trou central (7b), par exemple de l'ordre de 45°.

7. Dispositif selon l'une quelconque des revendications 4 à 6, **caractérisé en ce que** les pièces d'appui des choux dans leurs coupelles sont des coupoles formées de deux demi-coupoles (8a, 8b) articulées à une tige (9), ces deux demi-coupoles définissant une pince dont la position fermée correspond à celle de plaquage du chou dans sa coupelle.

8. Dispositif selon la revendication 7, **caractérisé en ce que** les demi-coupoles formant pince sont actionnées par le mouvement d'un manchon (8c) coulissant sur la tige (9), le manchon (8c) étant relié aux deux demi-coupoles (8a,8b) par des biellettes (8d,8e).

9. Dispositif selon l'une quelconque des revendications 4 à 6, **caractérisé en ce que** les pièces d'appui des choux dans leurs coupelles sont des coupoles (8) montées sur une tige (9) actionnée sensiblement perpendiculairement au plan de convoyage des coupelles (3), actionnement réalisé suivant un mouvement réversible entre une position basse d'appui des choux (6) dans les coupelles (3) et une position haute dans laquelle les coupoles (8) sont à distance des choux (6).

10. Dispositif selon la revendication 9, **caractérisé en ce que** l'actionnement des tiges (9) support de coupoles (8) est obtenu par des moyens comprenant un vérin (14) et un ressort de rappel (10), ou tout autre moyen équivalent.

11. Dispositif selon la revendication 9 ou 10, **caractérisé en ce que** les coupoles (8) sont en forme de cuvette monobloc.

12. Dispositif selon l'une quelconque des revendications 7 à 11, **caractérisé en ce que** les tiges (9) des coupoles (8) sont montées sur un support (12) coulissant sur une barre (13) s'étendant sensiblement parallèlement au plan de convoyage des coupelles (3), ce support coulissant (12) étant pourvu de moyens permettant son blocage en position prédéterminée de sorte à ce que la tige (9) de coupole (8) et le trou central (7) de la coupelle (3) placée en regard puissent être sensiblement alignés au premier poste (5) d'étrognage du chou (6).

13. Dispositif selon l'une quelconque des revendications 4 à 12, **caractérisé en ce qu'**il comporte, au deuxième poste (17) d'éclatement des choux (6), un couteau éclateur (18) monté sur une tige (19) actionnée sensiblement perpendiculairement au plan de convoyage des coupelles (3), actionnement réalisé suivant un mouvement réversible entre une position basse d'éclatement des choux en fleurettes et une position haute dans laquelle le couteau (18) est à distance des choux (6).

14. Dispositif selon la revendication 13, **caractérisé en ce que** le couteau éclateur est animé d'un mouvement axial descendant et tournant lors de sa pénétration dans l'inflorescence du chou.

15. Dispositif selon la revendication 13 ou 14, **caractérisé en ce que** l'actionnement des tiges (19) support de couteau (18) est obtenu par des moyens comprenant un vérin (25) et un ressort de rappel (20), ou tout autre moyen équivalent.

16. Dispositif selon l'une quelconque des revendications 13 à 15, **caractérisé en ce que** les couteaux éclateurs (18) sont pourvus d'un axe principal (30) à partie extrême inférieure en forme de lame tranchante (31) et présentent deux plans de symétrie (P1, P2) sensiblement perpendiculaires entre deux.

17. Dispositif selon la revendication 16, **caractérisé en ce que**, de part et d'autre d'un premier plan de symétrie (P2) du couteau éclateur (18), ce couteau (18) est pourvu de deux bras (32,33) s'étendant en direction radiale par rapport à l'axe principal (30) du couteau, ces bras (32,33) portant chacun trois lames (34,35,36).

18. Dispositif selon la revendication 17, **caractérisé en ce que** les trois lames portées par chacun des bras du couteau éclateur comprennent une première lame (35) s'étendant sensiblement suivant un plan de symétrie (P1) du couteau éclateur (18) et, de part et d'autre dudit plan (P1), deux lames (34,36) inclinées entre 40° et 60° environ par rapport à la direction radiale.

19. Dispositif selon l'une quelconque des revendications 13 à 18, **caractérisé en ce que** les tiges (19) des couteaux éclateurs (18) sont montés sur un support coulissant (22) sur une barre (23) s'étendant sensiblement parallèlement au plan de convoyage des coupelles (3), ce support coulissant (22) étant pourvu de moyens permettant son blocage en position prédéterminée de sorte à ce que l'axe principal (30) du couteau éclateur (18) et le trou central (7) de la coupelle (3) placée en dessous du couteau (18) puisent être sensiblement alignés, au deuxième poste (17) d'éclatement des choux en fleurettes.

20. Dispositif selon l'une quelconque des revendications 4 à 19, **caractérisé en ce que** les coupelles (3) sont montées de manière amovible sur une bande de convoyage.

21. Dispositif selon l'une quelconque des revendications 4 à 20, **caractérisé en ce que** la bande de convoyage défile en boucle sensiblement verticale et comprend un brin supérieur au droit duquel sont disposés les coupoles d'appui (8) et les couteaux éclateurs (18), et un brin inférieur dans lequel les coupelles (3) ont leur ouverture tournée vers le bas.

22. Dispositif selon l'une quelconque des revendications 4 à 21, **caractérisé en ce que** le convoyeur (2) est logé dans un caisson ouvert en partie supérieure, ce caisson comprenant une paroi de fond et des parois latérales, les fleurettes des choux à pommes tombant après découpe dans ledit caisson lors du retournement des coupelles (3) au cours du trajet de la bande de convoyage entre son brin supérieur et son brin inférieur.

23. Dispositif selon l'une quelconque des revendications 4 à 22, **caractérisé en ce que** des sur-coupelles sont disposées de manière amovible sur les coupelles (3), ces sur-coupelles comprenant une partie annulaire supérieure et des pattes de fixations latérales.
